(19) Europäisches Patentamt

European Patent Office

Office européen des brevets

(11) **EP 0 530 686 B1**

(12) **EUROPEAN PATENT SPECIFICATION**

(45) Date of publication and mention
of the grant of the patent:
**03.04.1996 Bulletin 1996/14**

(51) Int. Cl.$^6$: **B60P 3/035**, B65H 49/38

(21) Application number: **92114670.0**

(22) Date of filing: **27.08.1992**

(54) **Improvements in a carriage for transporting a cylindrical body into a winding machine**

Verbesserungen an einem Wagen zum Zuführen eines zylindrischen Körpers in eine Wickelmaschine

Perfectionnements à un chariot pour le transport d'un corps cylindriques dans un bobinoir

(84) Designated Contracting States:
**AT BE CH DE DK ES FR GB GR IE IT LI LU MC NL PT SE**

(30) Priority: **03.09.1991 FI 914145**

(43) Date of publication of application:
**10.03.1993 Bulletin 1993/10**

(73) Proprietor: **NOKIA-MAILLEFER HOLDING S.A.**
**CH-1024 Ecublens-Lausanne (CH)**

(72) Inventors:
 • **Jääskeläinen, Vesa**
 **S-19700 Bro (SE)**
 • **Linderoth, Gustaf**
 **A-19991 Enköping (SE)**

(74) Representative: **Howden, Christopher Andrew et al**
**FORRESTER & BOEHMERT**
**Franz-Joseph-Strasse 38**
**D-80801 München (DE)**

(56) References cited:
**EP-A- 0 407 162**          **WO-A-90/15771**

## Description

This invention relates to a displacing carriage for a winding machine for displacing a cylindrical body, such as a cable reel along an underlying surface to be transferred to gripping means, the carriage comprising

- two parallel wheeled support elements defining therebetween a space for receiving the cylindrical body, the support elements being adjustable by means of an adjusting machinery towards and away from each other in a transverse direction of the support elements;
- support means provided in the support elements for supporting the body to be displaced; and
- means for lifting and lowering the support means for raising the cylindrical body to be displaced from the underlying surface and for lowering the body to the surface, respectively.

Even though the invention will be described below mainly in connection with cable reels, the expression "cylindrical body" is also intended to refer to other cylindrical objects, such as paper rolls, rope reels, drums and the like.

In the production of an electric cable, the finished cable is wound on a cable reel in a special winding machine. One example of such a winding machine is disclosed in WO90/15771, Nokia-Maillefer Holding S.A. The winding machine comprises two passive pillars horizontally adjustable with respect to each other and interconnected by means of an upper beam. The pillars support vertically adjustable gripping pins which grip into central holes in the flanges of the reel. The purpose is to raise the cable reel by means of the gripping pins so that the reel can be rotated about its central axis. This kind of winding machine may be highly automated to perform automatically all winding operations, the lifting and lowering movement of the gripping pins, and the horizontal adjustments of the pins towards and away from each other for reels of different sizes.

It is known to displace reels from a storage of reels into a winding machine by means of special displacing carriages. One example of such a displacing carriage is disclosed in EP-A-407162, Nokia-Maillefer Holding S.A., which represents the closest prior art. The displacing carriage comprises two wheeled support elements provided with support means for lifting a reel supported between the support elements from the underlying surface for transporting the reel. This kind of displacing carriage may be highly automated to perform automatically all displacing movements as well as the lifting and lowering movements of the reels when displacing reels of different sizes.

To speed up the winding stages, it is important that the size of a specific reel to be wound, i.e. its width and diameter, are known in advance so that the gripping pins of the winding machine can be pre-adjusted at a mutual distance and at a height corresponding to the size of the reel when the displacing carriage is ready to deliver the next reel to be wound in the winding machine. The automatic cooperation between the winding machine and the displacing carriage is effective when the displacing carriage fetches reels from a computer-controlled storage of reels, as the size of reels at each particular point of the storage is thereby known in advance. Difficulties occur when the displacing carriage fetches reels e.g. from a group of reels supplied by a customer or when the reels have been changed manually in the storage so that they may easily get mixed up by accident. To avoid such a risk of error, an operator usually has to be present even in an automatic winding operation to control the displacement of reels and to correct the adjusting of the winding machine, if required.

The object of the present invention is to provide a device for the displacing carriage which avoids the above-mentioned disadvantage and by means of which the displacing carriage itself is able to identify the size of the cylindrical body displaced by it into the winding machine, and provides corresponding information for the adjusting machinery of the gripping pins of the winding machine.

According to the invention there is provided a displacing carriage for a winding machine, for displacing a cylindrical body, such as a cable reel, paper roll, rope reel, drum or the like, along an underlying surface to be transferred to gripping means, the carriage comprising

- two parallel wheeled support elements defining therebetween a space for receiving the cylindrical body, the support elements being adjustable by means of an adjusting machinery towards each other and away from each other in a transverse direction of the support elements;
- support means provided in the support elements for supporting the body to be displaced; and
- means for lifting and lowering the support means for raising the cylindrical body to be displaced from the underlying surface and for lowering the body to the surface, respectively;
   characterised in that the carriage comprises
- means for measuring the axial width and diameter of the cylindrical body to be displaced while the body is supported by the support means; and
- means for transmitting the measuring results to the winding machine for adjusting its gripping means.

The invention enables the width and diameter of the cylindrical body to be determined by simple means while the body is positioned in the displacing carriage, so that reliable information is obtained on the size of the body to be displaced. As the measuring results are applied to the winding machine, it is ensured that the gripping pins of the winding machine will be in a receiving position corresponding to the body to be wound next. In this way, the risk of damage caused by a wrong position of the gripping pins is avoided, the winding stages are speeded up, and less operating staff is needed.

In the following, an embodiment of the invention will be described in more detail with reference to the attached drawings, in which:-

FIGURE 1 is a perspective view of the cooperation of a winding machine with a displacing carriage;

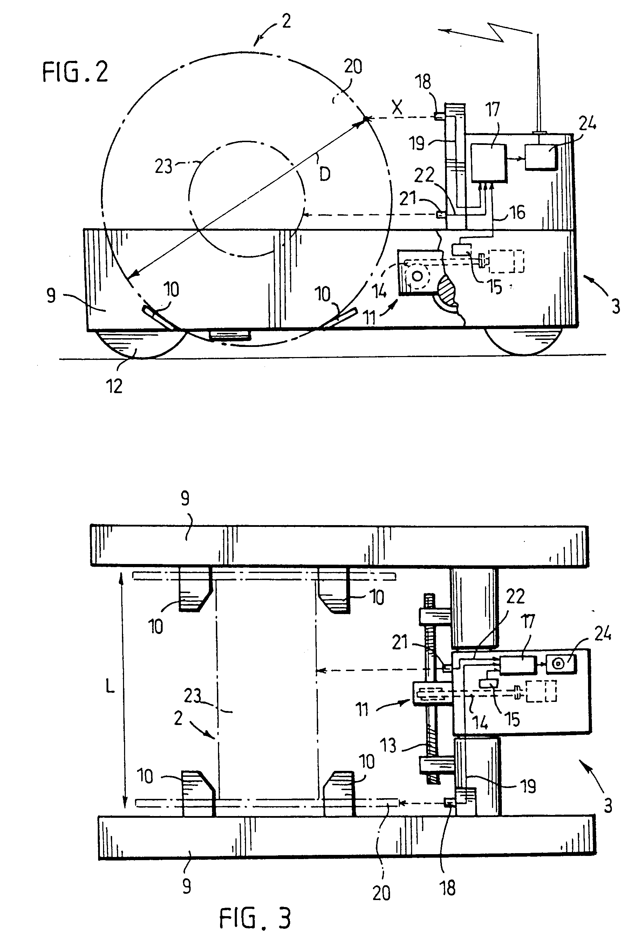

FIGURES 2 and 3 are a more detailed side and top view, respectively, of a displacing carriage provided with a device according to the invention; and
FIGURE 4 illustrates the operating principle of the diameter measuring means of the device.

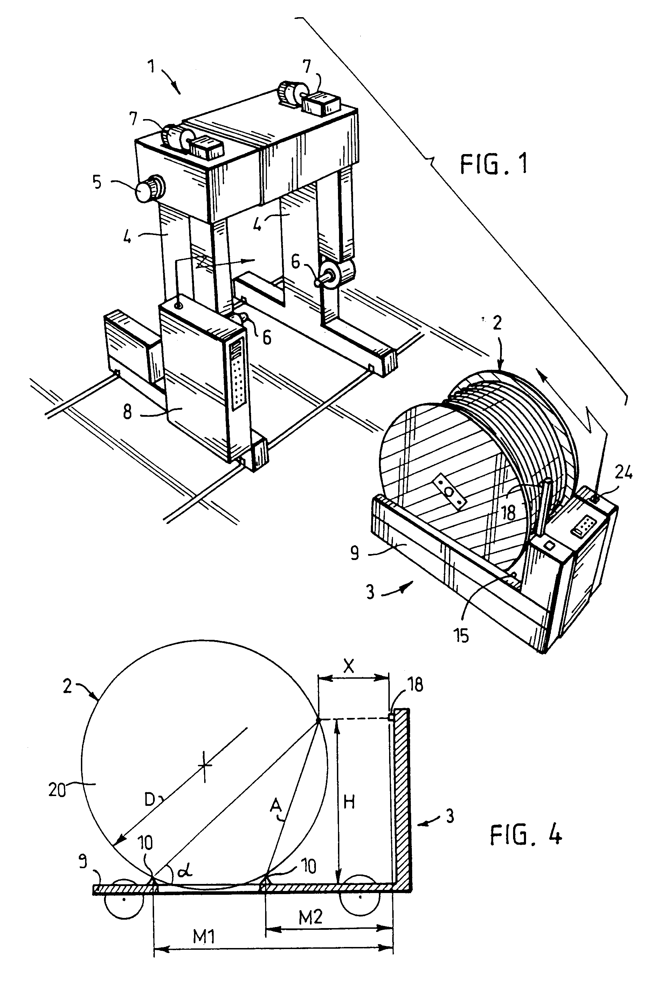

Figure 1 of the drawings shows a winding machine 1 for winding a cable onto a reel 2 or for unwinding it from the reel, and a displacing carriage 3 for transporting the cable reel into and from the winding machine. In the embodiment described herein, the winding machine is of the structure described in WO90/15771, and the displacing carriage is of the structure described in EP-A-407162, and therefore only their principal features will be described in the following.

The winding machine comprises two pillars 4 which are movable horizontally with respect to each other by means of an adjusting machinery 5. The pillars are provided with gripping pins 6 which are movable vertically by means of an adjusting machinery 7. The winding machine is provided with a control system 8 by means of which the operation of the adjusting machineries as well as all the winding operations can be controlled manually and automatically.

The displacing carriage comprises two parallel support elements 9 which define therebetween a space for the cable reel. Two mutually spaced fixed lifting plates 10 are attached to both support elements. The support elements are displaceable transversely towards each other and away from each other by means of an adjusting machinery 11. The support elements are provided with wheels 12 which can be lifted and lowered in a vertical plane for lifting the support elements into a transport position or lowering them into a loading or unloading position.

In the embodiment described the adjusting machinery 11 of the support elements comprises an adjusting rod 13 which is engaged with one support element by means of a left-handed screw and with the other element by means of a right-handed screw. The adjusting rod can be rotated by a drive shaft 14 to which an encoder 15 is connected for sending a digital signal 16 proportional to the number of rotations of the drive shaft to a calculating device 17. As the rotation of the drive shaft displaces the support elements closer to and away from each other, the number of rotations of the drive shaft provides information on the distance between the lifting plates of the support elements, that is, information on the width L of the reel supported by the lifting plates.

The displacing carriage is also provided with a sensor 18 mounted at a predetermined height in a vertical plane extending through the lifting plates 10 of one support element. The sensor operates on the triangle measuring principle, as will be described below, and generates a signal 19 which is sent to the calculating device 17. The sensor is positioned in close vicinity of a flange 20 of the reel supported by the displacing carriage, and so it measures a distance X to the periphery of the flange. On the basis of this distance, information is obtained on the diameter D of the reel.

The displacing carriage is further provided with a sensor 21 mounted midway between the support elements and directed towards a drum 23 of the reel. The sensor measures the distance to the drum and generates a signal 22 which is sent to the calculating device 17. This distance indicates whether the reel is empty or full.

Figure 4 illustrates the way of measuring of the sensor 18.

The position of the lifting plates 10 of the support element is fixed, and the distance from a vertical line passing through the sensor is M1 and M2, respectively. The sensor is positioned at a height H from a horizontal plane passing through the lifting plates. The reel is placed on the fixed lifting plates when the support elements are lifted into the transport position. The periphery of the flange of the reel is thereby positioned at a horizontal distance X from the sensor. When the sensor measures the distance X, the diameter D of the flange of the reel will be obtained as follows:

$$A = \sqrt{H^2 + (M2 - X)^2}$$

$$\alpha = \arctan \frac{H}{M1 - X}$$

$$D = \frac{A}{\sin\alpha}$$

The calculating device 17 contains required calculators and programming means and a transmitter 24 for transmitting the measuring results to the control system 8 of the winding machine. The measuring results obtained by the sensors 15 and 21 are also transmitted from the calculating device by means of the transmitter to the control system of the winding machine, which sends the required impulses to the adjusting machineries of the pillars and the gripping pins for displacing the gripping pins to a receiving position corresponding to the size of the reel. To measure the diameters of the flanges of the reels, only the sensor 18 is needed.

The drawings and the description related thereto are only intended to illustrate the idea of the invention. In its details, the device according to the invention may vary within the scope of the claims. In place of the pulse sensor 15, the measuring of the width of the reel may be carried out by means of a rotary potentiometer or a linear potentiometer, which generate an analog signal. The measuring of the width may also be carried out by using an ultrasonic, infrared or optical sensor positioned at a suitable point in those portions of the displacing carriage that move towards each other. For the distance measurement, the sensor 18 may be a photocell, ultrasound, laser, or the like. The measuring results may be transmitted by a radio, an infrared transmitter or an inductive loop provided in the floor. The distance between the support points 10 of the reel supported by the lifting plates may vary slightly with different reel sizes but this can be compensated for by calibrating the calculating means of the sensor 18 for the different reel size ranges.

## Claims

1. A displacing carriage (3) for a winding machine (1), for displacing a cylindrical body (2), such as a cable reel, paper roll, rope reel, drum or the like, along an underlying surface to be transferred to gripping means (6), the carriage comprising

   - two parallel wheeled support elements (9) defining therebetween a space for receiving the cylindrical body, the support elements being adjustable by means of an adjusting machinery (11) towards each other and away from each other in a transverse direction of the support elements;
   - support means (10) provided in the support elements for supporting the body to be displaced; and
   - means (12) for lifting and lowering the support means for raising the cylindrical body to be displaced from the underlying surface and for lowering the body to the surface, respectively; characterised in that the carriage comprises
   - means (15, 18) for measuring the axial width and diameter of the cylindrical body (2) to be displaced while the reel is supported by the support means (10); and
   - means (24) for transmitting the measuring results to the winding machine (1) for adjusting its gripping means (6).

2. A carriage according to claim 1, characterised in that the width measuring means comprise a sensor (15) sensing the operation of the adjusting machinery (11) of the support elements (9), the sensor measuring the distance which the support means (10) are adjustable towards each other and away from each other and being connected to the means (24) for transmitting the measuring results.

3. A carriage according to claim 1 or 2, characterised in that the diameter measuring means (18) operate on a triangle measuring principle.

4. A carriage according to claim 3, in which the support means for the cylindrical body (2) to be displaced comprise two fixed lifting plates (10) in both support elements (9), the lifting plates projecting into the space between the support elements and being positioned in pairs at a fixed distance from each other in the longitudinal direction of the support elements, characterised in that the diameter measuring means comprise a distance meter (18) mounted in a longitudinal vertical plane extending through the lifting plates (10) to be supported by one of the support elements (9), the distance meter measuring the distance to a peripheral edge (20) of the cylindrical body (2) raised by the lifting plates; and a calculating device (17) which calculates the diameter of the body on the basis of a distance measurement and is connected to the means (24) for transmitting the measuring results.

5. A carriage according to claim 3, characterised in that the means (24) for transmitting the measuring results comprise a radio transmitter, an infrared transmitter or the like.

6. A carriage according to claim 4, characterised in that the displacing carriage (3) is provided with means (21) for measuring the diameter of a central portion (23) of the cylindrical body (2) supported by the lifting plates (10).

7. A carriage according to claim 6, characterised in that the means (21) for measuring the diameter of the central portion comprise a distance meter mounted in the space between the support elements (9), the distance meter being connected to the means (24) for transmitting the measuring results.

## Patentansprüche

1. Ein Verlagerungswagen (3) für eine Wickelmaschine (1), zur Verlagerung eines zylindrischen Körpers (2), wie etwa einer Kabelspule, Papierrolle, Seilhaspel, Trommel oder dergleichen, entlang einer Unterlagefläche zur Überführung zu Greifmitteln (6), wobei der Wagen umfaßt

   - zwei parallele, mit Rädern versehene Trägerelemente (9), die zwischen sich einen Raum zum Aufnehmen eines zylindrischen Körpers definieren, wobei die Trägerelemente mittels eines Einstellmechanismus (11) aufeinander zu und voneinander weg in einer Querrichtung der Trägerelemente einstellbar sind;

   - Trägermittel (10), die in den Trägerelemente vorgesehen ist, um den zu verlagernden Körper zu tragen; und

   - Mittel (12) zum Anheben und Absenken der Trägermittel zum Anheben des zu verlagernden zylindrischen Körpers von der Unterlagefläche bzw. zum Absenken des Körpers auf die Fläche;

   dadurch gekennzeichnet, daß der Wagen umfaßt

- Mittel (15, 18) zum Messen der axialen Breite und des Durchmessers des zu verlagernden zylindrischen Körpers (2), während die Spule von den Trägermitteln (10) getragen wird; und

- Mittel (24) zum Übertragen der Meßergebnisse zur Wickelmaschine (1) zum Einstellen ihrer Greifmittel (6).

2. Ein Wagen nach Anspruch 1, dadurch gekennzeichnet, daß die Mittel zur Breitenmessung einen Sensor (15) umfassen, der die Operation des Einstellmechanismus (11) der Trägerelemente (9) erfaßt, wobei der Sensor die Entfernung mißt, über welche die Trägermittel (10) aufeinander zu und voneinander weg einstellbar sind, und der mit den Mitteln (24) zum Übertragen der Meßergebnisse verbunden ist.

3. Ein Wagen nach Anspruch 1 oder 2, dadurch gekennzeichnet, daß die Mittel zur Durchmessermessung (18) mit einem Dreieck-Meßprinzip arbeitet.

4. Ein Wagen nach Anspruch 3, bei dem die Trägermittel für den zu verlagernden zylindrischen Körper (2) zwei feste Hubplatten (10) in beiden Trägerelementen (9) umfassen, wobei die Hubplatten in den Raum zwischen den Trägerelementen hineinragen und paarweise in einer festen Entfernung voneinander in der Längsrichtung der Trägerelemente angeordnet sind, dadurch gekennzeichnet, daß die Mittel zur Durchmessermessung einen Entfernungsmesser (18), der in einer in Längsrichtung gelegenen vertikalen Ebene angebracht ist, die sich durch die Hubplatten (10) erstreckt, die durch eines der Trägerelemente (9) getragen werden, wobei der Entfernungsmesser die Entfernung zu einer Umfangskante (20) des zylindrischen Körpers (2) mißt, der von den Hubplatten angehoben wird; und eine Rechenvorrichtung (17) umfassen, die den Durchmesser des Körpers auf der Basis einer Entfernungsmessung berechnet und mit den Mitteln (24) zum Übertragen der Meßergebnisse verbunden ist.

5. Wagen nach Anspruch 3, dadurch gekennzeichnet, daß die Mittel (24) zum Übertragen der Meßergebnisse einen Radioübertrager, einen Infrarotüberträger oder dergleichen umfassen.

6. Ein Wagen nach Anspruch 4, dadurch gekennzeichnet, daß der Verlagerungswagen (3) mit Mitteln (21) zum Messen des Durchmessers eines Mittelabschnitts (23) des zylindrischen Körpers (2), der von den Hubplatten (10) getragen wird, versehen ist.

7. Ein Wagen nach Anspruch 6, dadurch gekennzeichnet, daß die Mittel (21) zum Messen des Durchmessers des Mittelabschnittes einen Entfernungsmesser umfassen, der in dem Raum zwischen den Trägerelementen (9) angebracht ist, wobei der Entfernungsmesser mit den Mitteln (24) zur Übertragung der Meßergebnisse verbunden ist.

**Revendications**

1. Chariot de déplacement (3) d'un bobinoir (1), pour déplacer un corps cylindrique (2), tel qu'une bobine de câble, un rouleau de papier, une bobine de corde, un tambour ou d'autres éléments semblables, sur une surface sous-jacente et qui doit être transporté jusqu'à des moyens de préhension, le chariot comprenant

- deux éléments de support montés sur roues parallèles (9) formant entre eux un espace permettant de recevoir le corps cylindrique, les éléments de support pouvant être réglés au moyen d'une machinerie de réglage (11) pour se rapprocher et s'écarter l'un de l'autre dans une direction transversale par rapport aux éléments de support ;
- des moyens de support (10) disposés dans les éléments de support pour supporter le corps à déplacer ; et
- des moyens (12) pour lever et abaisser les moyens de support pour respectivement soulever le corps cylindrique à déplacer de la surface sous-jacente et pour abaisser le corps vers la surface ;
  caractérisé en ce que le chariot comprend
- des moyens (15, 18) pour mesurer la largeur axiale et le diamètre du corps cylindrique (2) à déplacer pendant que le corps est supporté par le moyen de support (10) ; et
- des moyens (24) pour transmettre les résultats de mesure au bobinoir (1) de façon à régler ses moyens de préhension (6).

2. Chariot selon la revendication 1, caractérisé en ce que les moyens de mesure de largeur comprennent un détecteur (15) qui détecte le fonctionnement de la machinerie de réglage (11) des éléments de support (9), le détecteur mesurant la distance suivant laquelle les moyens de support (10) doivent être réglés en se rapprochant et en s'écartant l'un par rapport à l'autre et étant relié aux moyens (24) permettant de transmettre les résultats de mesure.

3. Chariot selon la revendication 1 ou 2, caractérisé en ce que les moyens de mesure de diamètre (18) fonctionnent selon un principe de mesure par triangulation.

4. Chariot selon la revendication 3, dans lequel les moyens de support du corps cylindrique (2) à déplacer comprennent deux plaques de levage fixes (10) dans chacun des éléments de support (9), les plaques de levage étant en saillie dans l'espace formé entre les éléments de support et étant positionnées par paires à une distance fixe l'une de l'autre dans la direction longitudinale des éléments de support, caractérisé en ce que les moyens de mesure de diamètre comprennent un mesureur de distance (18) monté dans un plan vertical longitudinal passant par les plaques de levage (10) dont le support est assuré par un des éléments de support (9), le mesureur de distance mesurant la distance à un bord périphérique (20) du corps cylindrique (2) soulevé par les plaques de levage ; et un dispositif de calcul (17) qui calcule le diamètre du corps à partir d'une mesure de distance et qui est relié aux moyens (24) destinés à transmettre les résultats de mesure.

5. Chariot selon la revendication 3, caractérisé en ce que les moyens (24) destinés à transmettre les résultats de mesure comprennent un émetteur radio, un émetteur à infrarouge ou un émetteur équivalent.

6. Chariot selon la revendication 4, caractérisé en ce que le chariot de déplacement (3) est équipé de moyens (21) destinés à mesurer le diamètre d'une partie centrale (23) du corps cylindrique (2) supporté par les plaques de levage (10).

7. Chariot selon la revendication 6, caractérisé en ce que les moyens (21) destinés à mesurer le diamètre de la partie centrale comprennent un mesureur de distance monté dans l'espace séparant les éléments de support (9), le mesureur de distance étant relié aux moyens (24) destinés à transmettre les résultats de mesure.

FIG. 1

FIG. 4

FIG.2

FIG. 3